(19) Europäisches Patentamt
European Patent Office
Office européen des brevets

(11) EP 3 385 677 B1

(12) **FASCICULE DE BREVET EUROPEEN**

(45) Date de publication et mention
de la délivrance du brevet:
**22.01.2020 Bulletin 2020/04**

(51) Int Cl.:
***G01C 25/00*** *(2006.01)*

(21) Numéro de dépôt: **18164005.3**

(22) Date de dépôt: **26.03.2018**

(54) **SYSTEME ET PROCEDE D'ANALYSE ET DE SURVEILLANCE DES MOUVEMENTS PARASITES D'UNE CENTRALE INERTIELLE PENDANT UNE PHASE D ALIGNEMENT STATIQUE**

SYSTEM UND VERFAHREN ZUR ANALYSE UND ÜBERWACHUNG DER STÖRENDEN BEWEGUNGEN EINES TRÄGHEITSNAVIGATIONSSYSTEMS WÄHREND EINER STATISCHEN AUSRICHTUNGSPHASE

A SYSTEM AND A METHOD OF ANALYZING AND MONITORING INTERFERING MOVEMENTS OF AN INERTIAL UNIT DURING A STAGE OF STATIC ALIGNMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.04.2017 FR 1770355**

(43) Date de publication de la demande:
**10.10.2018 Bulletin 2018/41**

(73) Titulaire: **Airbus Helicopters
13725 Marignane Cedex (FR)**

(72) Inventeur: **PETILLON, Jean-Paul
13140 MIRAMAS (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
EP-A1- 2 488 829    EP-A2- 2 330 382
WO-A1-2011/045032    FR-A1- 2 940 427
US-A1- 2006 047 427    US-A1- 2010 161 223

**Description**

Le domaine général de la présente invention est celui des systèmes de capteurs des aéronefs, et en particulier des centrales inertielles.

La présente invention concerne un système et un procédé d'analyse et de surveillance des mouvements parasites d'une centrale inertielle pendant une phase d'alignement statique de la centrale inertielle.

Plus précisément, la présente invention permet l'estimation des erreurs d'orientation et des erreurs de vitesse affectant les mesures de la centrale inertielle résultant de mouvements lors de sa phase d'initialisation statique pendant laquelle :

- la centrale inertielle aligne ses axes sur les axes géographiques et
- la centrale inertielle annule son estimation de vitesse.

Une centrale inertielle est un instrument utilisé notamment dans le domaine aéronautique, mais peut être installée à bord de tout type de véhicules, à savoir un navire, un sous-marin, un aéronef, un missile ou bien un véhicule spatial. Une centrale inertielle est capable d'intégrer les mouvements qu'elle subit, en particulier des accélérations et des vitesses angulaires, pour fournir des estimations de l'orientation, de la vitesse linéaire ainsi que de la position du véhicule. L'orientation d'un véhicule est définie par exemple par des angles de roulis, de tangage et de cap.

Une centrale inertielle comporte généralement six capteurs, à savoir trois gyromètres permettant de mesurer des vitesses angulaires autour de trois axes, et trois accéléromètres agencés pour mesurer des accélérations le long de ces trois axes. Une centrale inertielle n'a besoin d'aucune information extérieure. Une centrale inertielle exploite exclusivement les mesures fournies par ses capteurs internes de vitesses angulaires et de forces spécifiques pour estimer son orientation, sa vitesse et sa position par intégration au cours du temps des mesures de ses capteurs internes.

Du fait des processus d'intégrations temporelles mis en œuvre, une phase d'initialisation d'une centrale inertielle est indispensable au moment de son démarrage. La phase d'initialisation est généralement réalisée lorsque le véhicule utilisant la centrale inertielle est à l'arrêt, typiquement avant le décollage d'un aéronef.

Une phase d'initialisation comporte notamment une phase d'alignement durant laquelle sont estimés :

- une direction verticale grâce aux mesures des accéléromètres qui permettent de déterminer la direction de la gravité terrestre et donc de la verticale,
- une direction du Nord géographique grâce aux mesures des gyromètres qui détectent le vecteur de rotation terrestre et donc, moyennant la projection de ce vecteur sur le plan horizontal, la direction du Nord, et
- un vecteur vitesse par rapport au sol.

Usuellement, une position initiale n'est pas estimée par la centrale inertielle. Elle doit au contraire être insérée, par exemple par l'équipage.

Un processus d'alignement typiquement utilisé dans une centrale inertielle vise à faire converger vers des valeurs nulles d'une part les deux angles d'inclinaison d'une plateforme virtuelle calculée par la centrale inertielle et d'autre part un angle de désalignement de cette plateforme virtuelle autour de la direction verticale. Ces processus d'alignement utilisent typiquement un filtre de Kalman.

Certains processus d'alignement sont basés sur l'hypothèse que le véhicule est immobile et visent donc de surcroît à annuler les deux composantes horizontales de vitesse du véhicule par rapport au sol. On parle alors d'alignement statique. Dans la suite du document, le seul cas de l'alignement statique est traité. Donc, dans un objectif d'allègement du texte, le qualificatif statique est omis, mais à chaque occurrence du terme « alignement », il faut comprendre « alignement statique ».

Mais, pendant le déroulement d'un processus d'alignement, l'aéronef est susceptible de subir des mouvements parasites, tels qu'un remorquage par un véhicule tracteur. L'hypothèse d'immobilité est alors prise en défaut. Il en résulte une mauvaise précision de la centrale inertielle. Les imprécisions résultant de mouvements parasites pendant un alignement peuvent atteindre des valeurs telles qu'elles pourraient ensuite compromettre la sécurité du vol pendant la phase ultérieure de navigation. Pour éviter la pollution de la centrale inertielle, diverses protections sont connues.

Dans le but de surveiller l'immobilité de l'aéronef pendant la phase d'alignement de sa centrale inertielle, il est par exemple connu d'analyser l'amplitude du résidu de l'estimateur de Kalman réalisant l'alignement.

Ce type de surveillance par le processus d'alignement d'une centrale inertielle détecte de manière satisfaisante des mouvements parasites de fréquence relativement élevée provoqués par exemple par le remorquage de l'aéronef.

Le document EP 2488829 décrit ce type de méthode. Ce document décrit un procédé de détection de mouvements parasites basé sur la comparaison à un seuil prédéfini d'un signal résiduel entre un signal brut de position, obtenu par intégration des signaux issus des capteurs d'une centrale inertielle, et un signal théorique de modélisation de ce signal brut de position en fonction d'un modèle prédéterminé d'erreur en l'absence de mouvement. Selon ce document, les mouvements de grandes amplitudes, qu'ils soient de courte ou de longue durée, peuvent être détectés en comparant des mesures d'accélération avec des seuils alors que les mouvements de faibles amplitudes de courte durée peuvent être détectés à partir des paramètres d'un filtre de Kalman.

On connait également le document FR 2940427 qui décrit l'utilisation d'une centrale inertielle pour déterminer un cap selon deux modes différents, à savoir un mode « chercheur de Nord », la centrale inertielle étant fixée au sol et horizontale, et un mode gyroscopique, la centrale inertielle étant alors immobile par rapport au sol. Un écart entre les caps obtenus dans ces deux modes est déterminé et, en fonction de cet écart, le cap obtenu selon l'un de ces modes est retenu et utilisé.

Enfin, le document US 2006/047427 décrit un système et une méthode d'alignement d'une centrale inertielle utilisables y compris lorsque l'aéronef qu'elle équipe est en mouvement. Ce système comporte la centrale inertielle fournissant des informations de navigation purement inertielles et une source externe, tel un récepteur GNSS, indépendante de cette centrale inertielle fournissant également des informations de navigation. Le système comporte également une logique de navigation recevant ces informations de navigation et muni de filtres récursifs afin de traiter ces informations de navigation ainsi qu'une logique de contrôle d'intégrité destinée à surveiller, comparer et combiner ces informations de navigation. Notamment, des erreurs entre ces informations de navigation peuvent être définies et comparées avec des seuils prédéterminés afin de définir quelles informations de navigation fournies par la centrale inertielle et/ou la source externe peuvent être utilisées comme solution de navigation.

Toutefois, de tels processus d'alignement présentent l'inconvénient de ne pas être efficaces pour la détection de certains mouvements parasites spécifiques, notamment les mouvements lents dont la période coïncide avec la durée de la phase d'alignement complète.

Ce problème concerne particulièrement un aéronef à voilure tournante décollant d'une plateforme pétrolière à la mer et pouvant y subir des mouvements très lents et d'une amplitude de plusieurs mètres, dus par exemple au système de stabilisation de la position de la plateforme pétrolière.

Il apparait donc que les centrales inertielles et les processus d'alignement statique qu'elles mettent en oeuvre intègrent des moyens de détection de mouvements parasites pendant la phase d'alignement. Cependant, ces moyens de détection ne permettent pas une détection exhaustive de tout type de mouvements parasites susceptibles de perturber la phase d'alignement et, par suite, de générer des erreurs dangereuses dans les données fournies par la centrale inertielle dans sa phase ultérieure de navigation.

La présente invention a pour but de s'affranchir des limitations mentionnées ci-dessus afin de détecter tout type de mouvements parasites subis par une centrale inertielle et susceptible de perturber la phase d'alignement statique. La présente invention peut ensuite inhiber la validation de la phase d'alignement statique afin d'éviter la fourniture de données erronées par la centrale inertielle. La présente invention peut, alternativement, après détection de mouvements parasites et estimation quantifiée de leur effet sur la centrale inertielle, corriger les données erronées fournies par la centrale inertielle afin de les rendre exploitables, à savoir suffisamment précises.

Dans ce cadre, la présente invention propose un procédé d'analyse et de surveillance des mouvements parasites d'une centrale inertielle d'un aéronef pendant une phase d'alignement statique de la centrale inertielle.

Ce procédé selon l'invention est remarquable en ce qu'au cours de la phase d'alignement statique de la centrale inertielle, le procédé réalise les deux étapes suivantes :

- une acquisition de mesures de déplacement par rapport au sol de l'aéronef, et
- une estimation d'états d'un processus miroir dont le modèle est voisin du modèle du processus d'alignement de la centrale inertielle, l'estimation des états du processus miroir étant réalisée à partir des observations constituées par les mesures de déplacement.

Ce procédé est particulièrement destiné à être utilisé à bord d'un aéronef, mais il peut être appliqué à tout véhicule utilisant une centrale inertielle.

Pour appliquer ce procédé, l'aéronef comporte au moins une centrale inertielle, ainsi qu'un capteur de déplacement permettant de mesurer les déplacements par rapport au sol de l'aéronef et un estimateur d'un processus miroir de structure voisine de la structure du processus d'alignement de la centrale inertielle. Cet estimateur d'un processus miroir voisin du processus d'alignement de la centrale inertielle est configuré pour mettre en œuvre ce procédé d'analyse et de surveillance des mouvements parasites d'une centrale inertielle pendant une phase d'alignement.

Dans ce contexte, on entend par modèles de processus ou processus « voisins » des modèles de processus ou des processus qui sont presque identiques, un modèle d'un processus miroir pouvant notamment être simplifié ou bien approximé, voire simplifié et approximé vis-à-vis du modèle du processus d'alignement. Par exemple, le modèle d'un processus miroir est défini par un jeu d'équations différentielles simplifiées, de degré inférieur ou égal au nombre d'états du modèle du processus d'alignement.

Le capteur de déplacement est par exemple un capteur de vitesse fournissant des mesures d'une vitesse par

rapport au sol $\vec{v_g}$, de l'aéronef. Le capteur de déplacement peut également être un capteur de position fournissant des mesures de position par rapport au sol $\vec{x_g}$ de l'aéronef. Dans ces deux cas, le capteur de déplacement peut être par exemple un récepteur GNSS ou un radar à effet Doppler.

Comme évoqué précédemment, un processus d'alignement d'une centrale inertielle est basé par exemple sur un modèle comportant un ou plusieurs états, notamment les états représentant les erreurs d'orientation et les vitesses, dont l'évolution est gouvernée par une ou plusieurs équations différentielles dont la résolution, au cours de la phase d'alignement, permet la convergence des estimations des états de ce modèle vers des valeurs nulles. Le processus d'alignement peut donc prendre la forme d'un estimateur des erreurs d'orientation et des vitesses.

À cet estimateur des erreurs d'orientation et des vitesses, un processus de détection de mouvements parasites est généralement associé, typiquement basé sur l'analyse de résidus.

Malgré les moyens de détection de mouvements parasites mis en place dans la centrale inertielle, éventuellement intégrés au processus d'alignement, des mouvements parasites de la centrale inertielle restent indétectables tout en étant perturbants. Dès lors, l'alignement d'une centrale inertielle de l'art antérieur peut être considéré comme validé alors que dans le même temps les données fournies par la centrale inertielle sont sévèrement erronées et comprennent des erreurs d'orientation et de vitesse excédant le maximum acceptable.

Les mouvements parasites indétectables de manière autonome par le processus de détection des mouvements parasites de la centrale inertielle sont les mouvements dont l'évolution est identique, ou voisine, de l'évolution des états du processus générateur que constitue le solveur des équations différentielles du modèle du processus d'alignement de la centrale inertielle.

En effet, lorsque de tels mouvements reproduisent l'évolution de ces états, les écarts entre respectivement les caractéristiques de ce mouvement et les états estimés par le processus d'alignement sont constamment sensiblement nuls. En conséquence, le processus d'alignement se comporte comme si l'aéronef était immobile malgré la présence de ces mouvements.

Dès lors, tout mouvement de la centrale inertielle dont la fonction du temps peut être générée par le solveur de l'équation différentielle de son processus d'alignement, quelle que soit son amplitude, est indiscernable de l'immobilité par les seuls capteurs inertiels et engendre des estimations inertielles d'orientation et de vitesse erronées à l'issue de l'alignement de la centrale inertielle et, par suite, pendant toute la phase de navigation qui succède à la phase d'alignement. L'amplitude de telles erreurs n'est pas bornée.

Pour remédier à ce problème, le procédé selon l'invention utilise avantageusement un processus miroir dont le modèle est voisin du modèle de la propagation des erreurs dans le processus d'alignement de la centrale inertielle. Le procédé selon l'invention permet alors de réaliser une estimation des états de ce processus miroir à partir des observations constituées par les mesures de déplacement. Ces estimations d'états constituent des estimations des erreurs d'orientation et de vitesse affectant les données fournies par la centrale inertielle à la fin de la phase d'alignement.

Si le modèle de ce processus miroir était identique au modèle du processus d'alignement de la centrale inertielle, les équations différentielles gouvernant l'évolution des états du modèle du processus miroir et du modèle du processus d'alignement seraient alors les mêmes, et notamment les deux modèles ont le même nombre d'états.

Selon l'invention, le modèle du processus miroir est simplifié vis-à-vis du modèle du processus d'alignement. Notamment, certains états du processus d'alignement peuvent avoir un impact très faible sur le comportement global du modèle et peuvent donc être négligés et ne pas être incorporés au processus miroir.

Par exemple, lorsque les mesures de déplacement sont des mesures de vitesse par rapport au sol $\vec{v_g}$ de l'aéronef, le processus miroir comporte typiquement cinq états, à savoir trois angles d'erreur d'orientation de la plateforme virtuelle de la centrale inertielle par rapport aux axes géographiques et deux composantes horizontales de vitesse par rapport au sol. Les deux sorties de ce processus miroir sont des estimations de ces composantes horizontales de la vitesse par rapport au sol.

Dans un mode particulier de réalisation de l'invention, on utilise ce processus miroir en boucle ouverte. Ces deux sorties du processus miroir évoluent alors selon des fonctions polynômiales du temps, d'une part une fonction polynômiale du deuxième degré pour la composante Nord/Sud de la vitesse et d'autre part une fonction polynômiale du premier degré pour la composante Est/Ouest de la vitesse. Dans ce mode particulier de réalisation, l'estimation du processus miroir consiste à calculer :

i) une parabole, correspondant à la fonction polynômiale du deuxième degré, la plus proche des composantes Nord/Sud des mesures de la vitesse par rapport au sol, et
ii) une droite, correspondant à la fonction polynômiale du premier degré, la plus proche des composantes Est/Ouest des mesures de la vitesse par rapport au sol.

Ce calcul des fonctions polynômiales les plus proches peut être réalisé par la méthode des moindres carrés, non-récursifs ou récursifs.

Dans un autre mode de réalisation de l'invention, cette estimation des états du processus miroir consiste par exemple en un filtrage de Kalman dont les états sont ceux du processus miroir et dont les observations sont les mesures de déplacement par rapport au sol.

Dans le cas de la méthode des moindres carrés non-récursifs, l'acquisition des mesures de déplacement de l'aéronef et l'estimation d'états du processus miroir sont réalisées de façon séquentielle. Dans le cas de la méthode des moindres carrés récursifs et d'un filtrage de Kalman, l'acquisition des mesures de déplacement de l'aéronef et l'estimation d'états du processus miroir sont réalisées de façon simultanée.

Par ailleurs, dans le cadre de variantes, le procédé selon l'invention peut comporter une étape supplémentaire.

Ainsi, selon une première variante, l'étape supplémentaire du procédé est avantageusement une comparaison de la valeur absolue d'au moins une estimation d'un des états avec au moins un seuil de validation afin de valider ou non l'alignement de la centrale inertielle.

Par exemple, selon cette première variante, des seuils de validation de l'alignement sont définis. Ces seuils de validation sont généralement définis en phase de développement du système et du procédé d'analyse et de surveillance selon l'invention. Les valeurs de ces seuils de validation sont choisies en fonction de la précision attendue de la centrale inertielle. Chaque seuil de validation correspond respectivement à un des états estimés, ces états estimés correspondant respectivement aux erreurs d'orientation et de vitesse dues aux mouvements parasites pendant la phase d'alignement et affectant les données fournies par la centrale inertielle à l'issue de la phase d'alignement.

De la sorte, au cours de cette comparaison, la valeur absolue d'au moins une estimation des états est comparée au seuil de validation correspondant, et un signal « alignement non validé » est activé dès que la valeur absolue d'une estimation d'un état est supérieure au seuil de validation correspondant. Le procédé peut avantageusement permettre de se limiter à la comparaison des estimations des états influant le plus sur la performance de la centrale inertielle.

De préférence, les valeurs absolues individuelles des estimations des états sont comparées respectivement aux seuils de validation correspondants afin de vérifier la qualité de l'alignement de la centrale inertielle.

Selon un autre exemple de cette première variante, au cours de cette comparaison, au moins deux estimations d'états sont combinées pour former une combinaison d'états estimés et un signal « alignement non validé » est activé lorsque cette combinaison d'états estimés est supérieure à un seuil global. Le seuil global est une constante prédéterminée correspondant à une valeur maximale d'erreur acceptable et choisie en fonction de la précision attendue de la centrale inertielle.

Une telle combinaison d'états estimés permet notamment de privilégier la surveillance de certains états en affectant un poids à une estimation d'un état supérieur au poids d'une estimation d'un autre d'état. La combinaison d'états estimés est par exemple égale à une somme quadratique pondérée d'au moins deux estimations d'états.

Selon une seconde variante du procédé selon l'invention, le procédé peut utiliser les estimations d'états non pas pour valider ou non l'alignement, mais pour corriger les données fournies par la centrale inertielle afin que les données après correction soient conformes à la précision attendue de la centrale inertielle et soient, de ce fait, exploitables par les systèmes de l'aéronef dans lesquels la centrale inertielle est installée.

Dès lors, l'étape supplémentaire du procédé selon cette seconde variante consiste avantageusement en une correction des données fournies par la centrale inertielle permettant de rendre ces données inertielles exploitables, cette correction étant calculée à partir des états estimés par le processus miroir. Par exemple, chaque estimation d'un état du processus miroir est utilisée en tant que valeur initiale d'un processus estimateur des erreurs de la centrale inertielle en navigation. Ce processus estimateur d'erreurs de la centrale inertielle en navigation est ensuite entretenu pendant toute la durée de la phase de navigation de la centrale inertielle consécutive à la phase d'alignement. Enfin, les estimations d'erreurs ainsi entretenues sont retranchées des données fournies par la centrale inertielle.

En outre, pour bien estimer les paramètres des mouvements parasites de la centrale inertielle et en déduire les erreurs résultantes de la centrale inertielle avec précision, le procédé selon l'invention doit exploiter de préférence des mesures du déplacement elles-mêmes précises. Ces mesures de déplacement sont avantageusement fournies par exemple par un récepteur GNSS exploitant les incréments de phase des ondes porteuses des signaux émis par des satellites. En effet, le bruit de mesure qui en résulte, notamment pour les mesures de vitesse, est bien plus faible que celui des méthodes utilisées traditionnellement telles que celles basées sur la dérivée de la position ou sur l'observation de l'effet Doppler sur les dites porteuses. La mise en œuvre de cette technique est par exemple décrite dans le magazine « Inside GNSS », chronique « GNSS solutions » de mars-avril 2015, sous le titre « How does a GNSS receiver estimate velocity ? ».

Pour des mesures de vitesse, la précision qui résulte de la technique des incréments de phase des ondes porteuses est de l'ordre de quelques millimètres par seconde en utilisant exclusivement les signaux issus de satellites. Pour des mesures de position, la précision peut être de l'ordre de quelques millimètres mais l'obtention d'une telle précision nécessite, en plus des signaux issus de satellites, une station fixe au sol communiquant avec l'aéronef.

De la sorte, le procédé selon l'invention permet de réaliser un alignement de la centrale inertielle surveillé par l'intermédiaire du capteur de déplacement. Les mesures de déplacement fournies par le capteur de déplacement ne sont en effet pas mélangées ni combinées aux données délivrées par la centrale inertielle.

En conséquence, si le capteur de déplacement fournit des mesures corrompues, cela se traduira par l'émission d'une fausse alarme correspondant à un « alignement bougé », mais, en aucun cas, les données fournies par la centrale inertielle ne seront corrompue par ces mesures de déplacement.

La présente invention a aussi pour objet un système d'analyse et de surveillance des mouvements parasites d'une centrale inertielle d'un aéronef pendant une phase d'alignement. Un tel système d'analyse et de surveillance des mouvements parasites d'une centrale inertielle pendant une phase d'alignement comporte un capteur de déplacement de l'aéronef fournissant des mesures de déplacement par rapport au sol de l'aéronef ainsi qu'un estimateur d'un processus miroir dont la structure est voisine de la structure du processus d'alignement de la centrale inertielle. Cet estimateur est muni d'au moins un calculateur ou processeur et d'au moins une mémoire stockant notamment des instructions de calcul et éventuellement des seuils de validation de l'alignement de la centrale inertielle.

L'estimateur est configuré pour mettre en œuvre le procédé précédemment évoqué et pour permettre d'estimer des états du processus miroir à partir des observations constituées par les mesures de déplacement fournies par le capteur de déplacement.

L'invention et ses avantages apparaîtront avec plus de détails dans le cadre de la description qui suit avec des exemples de réalisation donnés à titre illustratif en référence aux figures annexées qui représentent :

- la figure 1, un aéronef muni d'un système d'analyse et de surveillance des mouvements parasites d'une centrale inertielle,
- la figure 2, le système d'analyse et de surveillance des mouvements parasites d'une centrale inertielle,
- la figure 3, un schéma synoptique d'un procédé d'analyse et de surveillance des mouvements parasites d'une centrale inertielle,
- la figure 4, une représentation d'un modèle d'un processus d'alignement d'une centrale inertielle,
- la figure 5, une représentation d'un processus miroir, et
- la figure 6, une représentation des mesures de déplacement de l'aéronef.

Les éléments présents dans plusieurs figures distinctes sont affectés d'une seule et même référence.

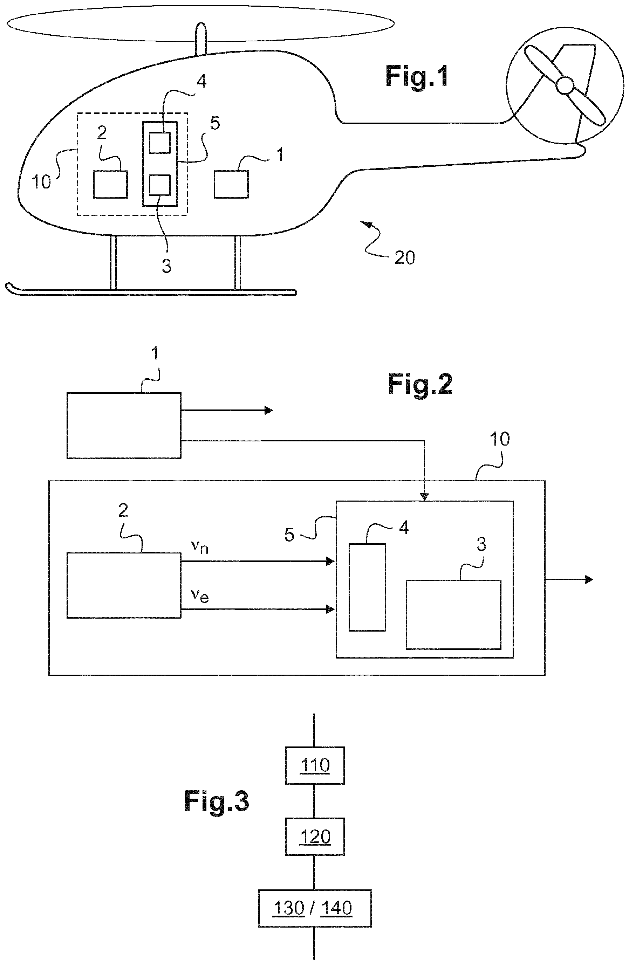

Sur la figure 1, un aéronef à voilure tournante 20 est représenté. Cet aéronef 20 comporte une centrale inertielle 1 et un système 10 d'analyse et de surveillance des mouvements parasites de la centrale inertielle 1 pendant une phase d'alignement de la centrale inertielle 1. Ce système 10 est représenté en détail sur la figure 2 et comporte un capteur de déplacement 2 de l'aéronef 20 et un estimateur 5 muni d'un calculateur 3 et d'une mémoire 4.

Le capteur de déplacement 2 est un récepteur GNSS et fournit des mesures précises de déplacement par rapport au sol de l'aéronef 20, qui peuvent être des mesures de vitesse ou de position, ces mesures étant basées par exemple sur les incréments de phase des ondes porteuses des signaux émis par les satellites d'au moins un système GNSS. La mémoire 4 stocke des instructions de calcul et éventuellement des seuils de validation de l'alignement de la centrale inertielle 1. Le calculateur 3 utilise ces instructions de calcul, les mesures de déplacement et le cas échéant les seuils de validation de l'alignement de la centrale inertielle 1 afin de mettre en œuvre un procédé d'analyse et de surveillance des mouvements parasites de la centrale inertielle 1 dont un schéma synoptique est représenté sur la figure 3.

Le capteur de déplacement 2 est relié à l'estimateur 5 afin de lui fournir les mesures de déplacement par rapport au sol de l'aéronef 20. La centrale inertielle 1 est reliée au système 10 afin de lui fournir un signal de début $t_0$ et un signal de fin $t_1$ de la phase d'alignement.

Ce procédé d'analyse et de surveillance des mouvements parasites de la centrale inertielle 1 pendant une phase d'alignement comporte deux étapes.

Une acquisition 110 de mesures de déplacement par rapport au sol de l'aéronef 20 est réalisée, par l'intermédiaire du capteur de déplacement 2, pendant la phase d'alignement de la centrale inertielle 1.

Une estimation 120 d'états d'un processus miroir est également réalisée à partir des observations constituées par les mesures de déplacement. Le modèle du processus miroir a une structure voisine de celle du modèle du processus d'alignement de la centrale inertielle 1.

Le modèle du processus miroir peut également être rigoureusement identique au modèle du processus d'alignement de la centrale inertielle 1.

Pendant la phase d'alignement, le processus d'alignement vise à estimer la direction verticale, en annulant les deux angles d'inclinaison de la centrale inertielle 1 autour des axes géographiques Nord/Sud et Est/Ouest, à estimer la direction du Nord en annulant l'angle de désalignement de la centrale inertielle 1 autour de l'axe vertical, et enfin à estimer les composantes de la vitesse par rapport au sol de l'aéronef 20. Le processus d'alignement d'une centrale inertielle 1 est par exemple un système à cinq états, qui sont :

i) les trois écarts angulaires entre d'une part les axes de la plateforme virtuelle de centrale inertielle 1 et d'autre part la direction des axes géographiques locaux,

ii) les deux composantes horizontales de vitesse par rapport au sol de la centrale inertielle 1.

Si la centrale inertielle 1 est réellement immobile lors de la phase d'alignement, ces écarts angulaires et ces composantes horizontales de vitesse convergent vers des valeurs nulles et la centrale inertielle 1 se trouve correctement initialisée.

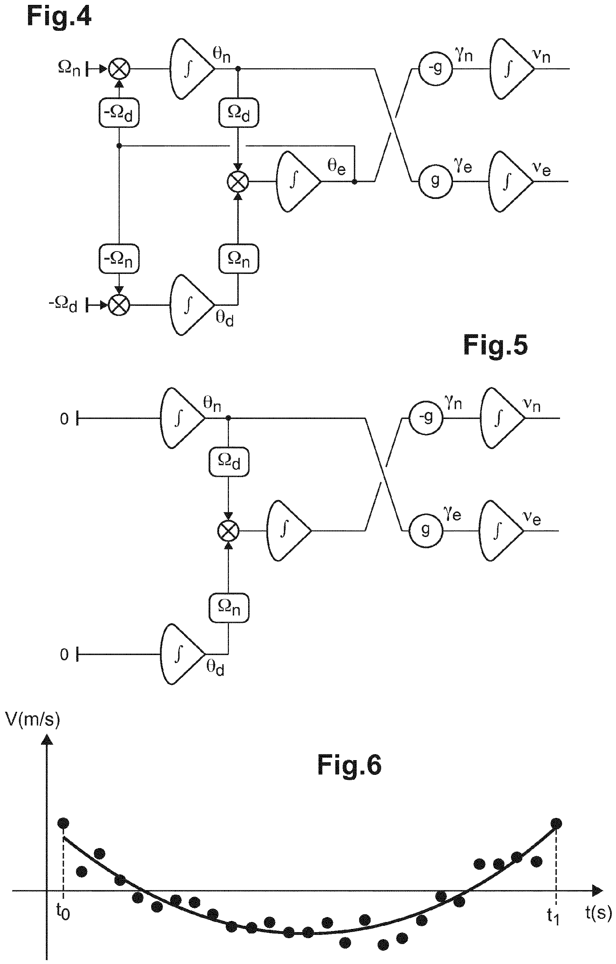

Un schéma-bloc d'un exemple d'un modèle du processus d'alignement de la centrale inertielle 1 est représenté sur la figure 4. Pour ce processus d'alignement, $\theta_n$ est l'erreur d'orientation autour de l'axe Nord/Sud, $\theta_e$ est l'erreur d'orientation autour de l'axe Est/Ouest, $\theta_d$, est l'erreur d'orientation autour d'un axe vertical, $v_n$ est la vitesse le long de l'axe Nord/Sud et $v_e$ est la vitesse le long de l'axe Est/Ouest.

Ce modèle du processus d'alignement prend en compte la latitude connue $\phi$ de l'aéronef 20 et utilise le module de l'accélération de la pesanteur terrestre g d'une part, et un vecteur représentant la vitesse de rotation $\overrightarrow{\Omega_E}$ de la terre autour de son axe d'autre part. Deux projections $\Omega_n$, $\Omega_d$ de ce vecteur vitesse de rotation $\overrightarrow{\Omega_E}$, respectivement sur l'axe Nord/Sud et sur l'axe vertical, dépendantes de la latitude $\phi$, sont calculées en tant que :

$$\Omega_n = \Omega_E . cos\ \phi \quad \text{et} \quad \Omega_d = \Omega_E . sin\ \phi.$$

Sur cette figure 4, le symbole $\otimes$ représente un additionneur et le symbole ⟨∫⟩ représente un intégrateur. Les erreurs d'accélération $\gamma_n$ le long de l'axe Nord/Sud et $\gamma_e$ le long de l'axe Est/Ouest sont également indiquées.

Un estimateur des états du processus d'alignement peut alors être un filtre de Kalman comportant ces cinq états. Dans d'autres exemples de processus d'alignement, un ou plusieurs états supplémentaires peuvent éventuellement être mis en œuvre. Par exemple, la latitude $\phi$ de l'aéronef 20, lorsqu'elle est inconnue, peut être un état supplémentaire du processus d'alignement et peut alors être déterminée par l'estimateur.

Le modèle du processus miroir utilisé par le procédé selon l'invention peut comporter un modèle rigoureusement identique au modèle du processus d'alignement représenté sur la figure 4. Dans ce cas, ces deux modèles ont le même nombre d'états et les mêmes matrices définissant les relations entre les états.

Le modèle du processus miroir peut également être simplifié ou bien approximé vis-à-vis du modèle du processus d'alignement. Par exemple, le mode à 24 heures lié à la rotation terrestre a notamment été négligé pour établir le processus miroir représenté sous la forme d'un schéma-bloc sur la figure 5.

Quand il fonctionne en boucle ouverte, le modèle de ce processus miroir de la figure 5 génère sur ses sorties des profils de vitesse temporels prenant la forme de deux fonctions polynômiales du temps :

$$v_e(t) = \theta_{n0}.g.t + V_{e0}$$

et

$$v_n(t) = \frac{1}{2}.(\theta_{d0}.\Omega_n + \theta_{n0}.\Omega_d).g.t^2 + \theta_{e0}.g.t + V_{n0}.$$

De ces équations, on déduit que les mouvements ayant un effet sur la précision de l'alignement de la centrale inertielle 1 sont les mouvements consistant en :

 i) une rampe de vitesse le long de l'axe Est/Ouest, ladite rampe étant définie par les coefficients $\theta_{n0}$ et $V_{e0}$, et
 ii) une parabole de vitesse le long de l'axe Nord/Sud, ladite parabole étant définie par les coefficients $\theta_{d0}$, $\theta_{n0}$, $\theta_{e0}$ et $V_{n0}$.

En utilisant les mesures de déplacement, qui sont dans ce cas des mesures de la vitesse par rapport au sol de l'aéronef 20 pendant la phase d'alignement de la centrale inertielle 1, le procédé selon l'invention permet d'identifier les coefficients de ces deux fonctions polynômiales. La figure 6 présente ces mesures de la vitesse par rapport au sol de l'aéronef 20 le long de l'axe Nord/Sud obtenues pendant la phase d'alignement, à savoir entre un début $t_0$ et une fin $t_1$ d'une phase d'alignement, ainsi qu'une représentation de la fonction polynômiale correspondante à cette vitesse le long de l'axe Nord/Sud.

Les coefficients de ces fonctions polynômiales sont directement liés aux états du processus miroir. L'estimation 120 d'états du processus miroir consiste soit en l'estimation de ces coefficients de chaque fonction polynômiale, coefficients à partir desquels on déduit les états, soit en l'estimation directe des états. Cette estimation 120 des états du processus miroir peut être effectuée à partir des observations constituées par les mesures de déplacement par des méthodes mathématiques connues telles que la méthode des moindres carrés non récursifs ou bien la méthode des moindres carrés récursifs ou encore en utilisant un filtre de Kalman.

Le procédé selon l'invention peut utiliser au cours d'une étape supplémentaire 130,140 ces estimations des erreurs d'orientation et des vitesses de la centrale inertielle 1 due aux mouvements parasites lors de cette phase d'alignement.

Selon une première variante de l'invention, cette étape supplémentaire du procédé est une comparaison 130 de la valeur absolue d'au moins une estimation des erreurs d'orientation et des vitesses de la centrale inertielle 1 avec au moins un seuil de validation et l'activation d'un signal « alignement non validé » si au moins un des seuils est dépassé.

L'activation de ce signal « alignement non validé » révèle alors que la précision des données fournies par la centrale inertielle 1 est réputée insuffisante, et que la phase d'alignement de la centrale inertielle 1 doit par exemple être relancée, ou que l'aéronef doit être opéré dans un mode ne requérant pas les mesures inertielles.

Selon une seconde variante de l'invention, l'étape supplémentaire du procédé consiste en une correction 140 des données fournies par la centrale inertielle 1. Cette correction 140 utilise les estimations des erreurs d'orientation et des vitesses de la centrale inertielle 1 résultant de mouvements parasites pendant cette phase d'alignement et précédemment calculées, afin d'améliorer les données fournies par la centrale inertielle 1 et de les rendre suffisamment précises pour être exploitables.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Par exemple le capteur de déplacement peut être agencé à l'extérieur du système 10 et fournir ses mesures de déplacement au système 10 afin qu'il les utilise.

Il est bien sûr également envisageable de remplacer un moyen décrit par un moyen équivalent sans sortir du cadre de la présente invention.

## Revendications

1. Procédé d'analyse et de surveillance des mouvements parasites d'une centrale inertielle (1) d'un aéronef (20) pendant une phase d'alignement statique de ladite centrale inertielle (1), tel que, au cours de ladite phase d'alignement statique de ladite centrale inertielle (1), ledit procédé réalise les étapes suivantes :

   - une acquisition (110) de mesures de déplacement dudit aéronef (20) par rapport au sol, fournies par un capteur de déplacement de l'aéronef (20), et
   - une estimation (120) des états d'un processus miroir dont le modèle est simplifié et/ou approximé vis-à-vis du modèle d'un processus d'alignement statique de ladite centrale inertielle (1) utilisé durant ladite phase d'alignement statique,

   ladite estimation desdits états dudit processus miroir étant réalisée à partir des observations constituées par lesdites mesures de déplacement.

2. Procédé selon la revendication 1,
   **caractérisé en ce que**, des seuils de validation dudit alignement statique ayant été définis préalablement à ladite phase d'alignement statique de ladite centrale inertielle (1), chaque seuil de validation correspondant respectivement à un desdits états estimés, ledit procédé comporte une étape supplémentaire de comparaison (130) de la valeur absolue d'au moins une estimation d'un desdits états avec au moins un seuil de validation.

3. Procédé selon la revendication 2,
   **caractérisé en ce que**, au cours de ladite étape supplémentaire de comparaison (130), la valeur absolue d'au moins une estimation desdits états est comparée audit seuil de validation correspondant, et un signal « alignement non validé » est activé dès que la valeur absolue d'une estimation d'un état est supérieure audit seuil de validation correspondant.

4. Procédé selon la revendication 2,
   **caractérisé en ce que**, au cours de ladite étape supplémentaire de comparaison (130), au moins deux estimations desdits états sont combinées pour former une combinaison d'états estimés et un signal « alignement non validé » est activé lorsque ladite combinaison d'états estimés est supérieure à un seuil global.

**5.** Procédé selon la revendication 4,
**caractérisé en ce que** ladite combinaison d'états estimés est égale à une somme quadratique pondérée d'au moins deux estimations desdits états.

**6.** Procédé selon la revendication 1,
**caractérisé en ce que** ledit procédé comporte une étape supplémentaire de correction (140) des données fournies par ladite centrale inertielle (1), ladite étape supplémentaire de correction (140) utilisant des estimations d'erreurs d'orientation et des vitesses de ladite centrale inertielle (1) résultant de mouvements parasites pendant ladite phase d'alignement afin de rendre des données fournies par ladite centrale inertielle (1) exploitables.

**7.** Procédé selon la revendication 6,
**caractérisé en ce que** lors de ladite étape supplémentaire de correction (140), ladite correction est calculée à partir desdits états estimés, chaque état estimé étant utilisée en tant que valeur initiale d'un processus estimateur des erreurs de ladite centrale inertielle (1), ledit processus estimateur d'erreurs étant entretenu pendant toute la durée d'une phase de navigation de ladite centrale inertielle (1) consécutive à ladite phase d'alignement et lesdites estimations desdites erreurs entretenues étant retranchées desdites données fournies par ladite centrale inertielle (1).

**8.** Procédé selon l'une quelconque des revendications 1 à 7,
**caractérisé en ce qu'**au cours de ladite acquisition (110), lesdites mesures de déplacement par rapport au sol dudit aéronef (20) sont des mesures d'une vitesse par rapport au sol ($\overrightarrow{v_g}$) dudit aéronef (20).

**9.** Procédé selon l'une quelconque des revendications 1 à 7,
**caractérisé en ce qu'**au cours de ladite acquisition (110), lesdites mesures de déplacement par rapport au sol dudit aéronef (20) sont des mesures d'une position par rapport au sol ($\overrightarrow{x_g}$) dudit aéronef (20).

**10.** Procédé selon l'une quelconque des revendications 1 à 9,
**caractérisé en ce que** ladite estimation (120) d'états dudit processus miroir consiste en l'estimation des coefficients d'au moins une fonction polynômiale du temps proche desdites mesures de déplacement.

**11.** Procédé selon la revendication 10,
**caractérisé en ce que**, lesdites mesures de déplacement étant des mesures de vitesse par rapport au sol $\overrightarrow{v_g}$, ledit modèle dudit processus miroir est apte à générer une fonction polynômiale du temps du deuxième degré pour la composante Nord/Sud de vitesse par rapport au sol et une fonction polynômiale du temps du premier degré pour la composante Est/Ouest de vitesse par rapport au sol.

**12.** Procédé selon l'une quelconque des revendications 10 à 11,
**caractérisé en ce que** ladite estimation (120) d'états dudit processus miroir est réalisée par la méthode des moindres carrés dont les coefficients à identifier sont ceux de ladite au moins une fonction polynômiale du temps.

**13.** Procédé selon l'une quelconque des revendications 1 à 11,
**caractérisé en ce que** ladite estimation (120) d'états dudit processus miroir consiste en un filtrage de Kalman dont les états sont ceux dudit processus miroir et dont les observations sont lesdites mesures de déplacement par rapport au sol.

**14.** Système (10) d'analyse et de surveillance des mouvements parasites d'une centrale inertielle (1) pendant une phase d'alignement statique, ledit système (10) comportant un capteur de déplacement (2) d'un aéronef (20) fournissant des mesures de déplacement par rapport au sol dudit aéronef (20), tel que ledit système (10) comporte un estimateur (5) d'un processus miroir simplifié et/ou approximé vis-à-vis du processus d'alignement statique de ladite centrale inertielle (1), ledit estimateur (5) étant configuré pour mettre en œuvre le procédé selon les revendications 1 à 13 et muni d'au moins un calculateur (3) et d'au moins une mémoire (4) stockant des seuils de validation dudit alignement statique de ladite centrale inertielle (1) et des instructions de calcul, ledit estimateur (5) permettant d'estimer des états dudit processus miroir dont un modèle est simplifié et/ou approximé vis-à-vis du modèle dudit processus d'alignement statique de ladite centrale inertielle (1), ladite estimation (120) desdits états dudit processus miroir étant réalisée à partir des observations constituées par des mesures de déplacement fournies par ledit capteur de déplacement (2).

**Patentansprüche**

1. Verfahren zur Analyse und Überwachung von Störbewegungen einer inertialen Messeinheit (1) eines Luftfahrzeugs (20) während einer statischen Ausrichtungsphase der inertialen Messeinheit (1),

bei dem während der statischen Ausrichtungsphase der inertialen Messeinheit (1) das Verfahren die folgenden Schritte ausführt:

- Erfassen (110) von Messungen der Bewegung des Luftfahrzeugs (20) in Bezug auf den Boden, die von einem Bewegungssensor des Luftfahrzeugs (20) bereitgestellt werden, und
- Schätzen (120) der Zustände eines Spiegelprozesses, dessen Modell gegenüber dem Modell eines während der statischen Ausrichtungsphase verwendeten statischen Ausrichtungsprozesses der inertialen Messeinheit (1) vereinfacht und/oder angenähert ist,

wobei die Schätzung der Zustände des Spiegelprozesses ausgehend von den durch die Bewegungsmessungen gebildeten Beobachtungen durchgeführt wird.

2. Verfahren nach Anspruch 1,
**dadurch gekennzeichnet, dass** Validierungsschwellenwerte der statischen Ausrichtung vor der statischen Ausrichtungsphase der inertialen Messeinheit (1) definiert wurden, und dass jeder Validierungsschwellenwert jeweils einem der geschätzten Zustände entspricht, wobei das Verfahren einen zusätzlichen Schritt des Vergleichens (130) des Absolutwerts von mindestens einer Schätzung eines der Zustände mit mindestens einem Validierungsschwellenwert umfasst.

3. Verfahren nach Anspruch 2,
**dadurch gekennzeichnet, dass** in dem zusätzlichen Vergleichsschritt (130) der Absolutwert mindestens einer Schätzung der Zustände mit dem entsprechenden Validierungsschwellenwert verglichen wird und ein "Ausrichtung nicht validiert"-Signal aktiviert wird, sobald der Absolutwert einer Schätzung eines Zustands über dem entsprechenden Validierungsschwellenwert liegt.

4. Verfahren nach Anspruch 2,
**dadurch gekennzeichnet, dass** in dem zusätzlichen Vergleichsschritt (130) mindestens zwei Schätzungen der Zustände kombiniert werden, um eine Kombination von geschätzten Zuständen zu bilden, und ein "Ausrichtung nicht validiert"-Signal aktiviert wird, wenn die Kombination von geschätzten Zuständen über einem Gesamtschwellenwert liegt.

5. Verfahren nach Anspruch 4,
**dadurch gekennzeichnet, dass** die Kombination von geschätzten Zuständen gleich einer gewichteten quadratischen Summe von mindestens zwei Schätzungen der Zustände ist.

6. Verfahren nach Anspruch 1,
**dadurch gekennzeichnet, dass** das Verfahren einen zusätzlichen Schritt des Korrigierens (140) der von der inertialen Messeinheit (1) gelieferten Daten umfasst, wobei der zusätzliche Schritt des Korrigierens (140) Schätzungen von Fehlern der Orientierung und von Geschwindigkeiten der inertialen Messeinheit (1) verwendet, die sich aus Störbewegungen während der Ausrichtungsphase ergeben, um die von der inertialen Messeinheit (1) bereitgestellten Daten nutzbar zu machen.

7. Verfahren nach Anspruch 6,
**dadurch gekennzeichnet, dass** in dem zusätzlichen Schritt des Korrigierens (140) die Korrektur anhand der geschätzten Zustände berechnet wird, wobei jeder geschätzte Zustand als Anfangswert eines Fehlerschätzprozesses der inertialen Messeinheit (1) verwendet wird, wobei der Fehlerschätzprozess über die gesamte Dauer einer auf die Ausrichtungsphase folgenden Navigationsphase der inertialen Messeinheit (1) aufrechterhalten wird und die aufrechterhaltenen Schätzungen der Fehler aus den von der inertialen Messeinheit (1) bereitgestellten Daten herausgerechnet werden.

8. Verfahren nach einem der Ansprüche 1 bis 7,
**dadurch gekennzeichnet, dass** während des Erfassens (110) die Messungen der Bewegung des Luftfahrzeugs (20) relativ zum Boden Messungen einer Geschwindigkeit relativ zum Boden $(\vec{v_g})$ des Luftfahrzeugs (20) sind.

**9.** Verfahren nach einem der Ansprüche 1 bis 7,
**dadurch gekennzeichnet, dass** während der Erfassung (110) die Messungen der Bewegung des Luftfahrzeugs (20) relativ zum Boden Messungen einer Position relativ zum Boden ($\overrightarrow{x_g}$) des Luftfahrzeugs (20) sind.

**10.** Verfahren nach einem der Ansprüche 1 bis 9,
**dadurch gekennzeichnet, dass** die Zustandsschätzung (120) des Spiegelprozesses darin besteht, die Koeffizienten mindestens einer den Bewegungsmessungen nahen Polynomfunktion der Zeit zu schätzen.

**11.** Verfahren nach Anspruch 10,
**dadurch gekennzeichnet, dass**, wenn die Bewegungsmessungen Messungen der Geschwindigkeit relativ zum Boden ($\overrightarrow{vg}$) sind, das Modell des Spiegelprozesses in der Lage ist, eine Polynomfunktion zweiten Grades in der Zeit für die Nord/Süd-Komponente der Geschwindigkeit relativ zum Boden und eine Polynomfunktion ersten Grades in der Zeit für die Ost/West Komponente der Geschwindigkeit zu erzeugen.

**12.** Verfahren nach einem der Ansprüche 10 bis 11,
**dadurch gekennzeichnet, dass** die Schätzung (120) von Zuständen des Spiegelprozesses nach dem Verfahren der kleinsten Quadrate durchgeführt wird, wobei die zu identifizierenden Koeffizienten diejenigen der mindestens einen Polynomfunktion der Zeit sind.

**13.** Verfahren nach einem der Ansprüche 1 bis 11,
**dadurch gekennzeichnet, dass** die Schätzung (120) der Zustände des Spiegelprozesses aus einer Kalman-Filterung besteht, deren Zustände diejenigen des Spiegelprozesses sind und deren Beobachtungen die Messungen der Bewegung relativ zum Boden sind.

**14.** System (10) zum Analysieren und Überwachen von Störbewegungen einer inertialen Messeinheit (1) während einer statischen Ausrichtungsphase, wobei das System (10) einen Sensor (2) für Bewegungen eines Luftfahrzeugs (20) umfasst, der Messungen der Bewegung relativ zum Boden des Luftfahrzeugs (20) liefert, so dass das System (10) einen Schätzer (5) eines gegenüber dem statischen Ausrichtungsprozess der inertialen Messeinheit (1) vereinfachten und/oder angenäherten Spiegelprozesses umfasst,
wobei der Schätzer (5) konfiguriert ist, um den Prozess nach den Ansprüchen 1 bis 13 durchzuführen, und mit mindestens einem Computer (3) und mindestens einem Speicher (4) versehen ist, der Validierungsschwellenwerte für die statische Ausrichtung der inertialen Messeinheit (1) und Rechenanweisungen speichert, wobei der Schätzer (5) es ermöglicht, Zustände des Spiegelprozesses zu schätzen, von dem ein Modell gegenüber dem Modell des statischen Ausrichtungsprozesses der inertialen Messeinheit (1) vereinfacht und/oder angenähert ist, wobei die Schätzung (120) der Zustände des Spiegelprozesses auf der Grundlage von Beobachtungen durchgeführt wird, die durch vom dem Bewegungssensor (2) gelieferte Bewegungsmessungen gebildet werden.

**Claims**

**1.** Method for analysing and monitoring interfering movements of an inertial unit (1) of an aircraft (20) during a static alignment phase of said inertial unit (1), such that, during the said static alignment phase of said inertial unit (1), said method carries out the following steps:

- an acquisition (110) of displacement measurements of said aircraft (20) with respect to the ground, provided by a displacement sensor of the aircraft (20), and
- an estimate (120) of the states of a mirror process in which the model is simplified and/or approximated with respect to the model of a static alignment process of said inertial unit (1) used during the static alignment phase, said estimate of said states of said mirror process being carried out using observations consisting of said displacement measurements.

**2.** Method according to claim 1, **characterised in that** validation thresholds of said static alignment having been defined previously for said static alignment phase of said inertial unit (1), each validation threshold corresponding respectively to one of said estimated states, said method comprises an extra comparison step (130) of comparing the absolute value of at least one estimate of one of said states with at least one validation threshold.

**3.** Method according to claim 2, **characterised in that** during said extra comparison step (130), the absolute value of at least one estimate of said states is compared with the corresponding validation threshold, and a "non-validated alignment" signal is activated as soon as the absolute value of an estimate of a state is greater than said corresponding validation threshold.

4. Method according to claim 2, **characterised in that** during said extra comparison step (130), at least two estimates of said states are combined so as to form a combination of estimated states and a "non-validated alignment" signal is activated when said combination of estimated states is greater than an overall threshold.

5. Method according to claim 4, **characterised in that** said combination of estimated states is equal to a weighted quadratic sum of at least two estimates of said states.

6. Method according to claim 1, **characterised in that** said method comprises an extra correction step (140) of the data provided by said inertial unit (1), the extra correction step (140) using estimates of orientation errors and velocities of said inertial unit (1) resulting from unwanted movements during said alignment phase, so as to make the data supplied by said inertial unit (1) useable.

7. Method according to claim 6, **characterised in that** during said extra correction step (140), said correction is calculated from said estimated states, each estimated state being used as an initial value of an estimation process of the errors of said inertial unit (1), said estimation process of errors being maintained throughout the duration of a navigation phase of said inertial unit (1) following said alignment phase and said estimates of said maintained errors being subtracted from said data provided by said inertial unit (1).

8. Method according to any one of claims 1 to 7, **characterised in that** during said acquisition (110), said displacement measurements with respect to the ground of said aircraft (20) are measurements of a velocity with respect to the ground $(\overrightarrow{v_g},)$ of said aircraft (20).

9. Method according to any one of claims 1 to 7, **characterised in that** during said acquisition (110), said displacement measurements with respect to the ground of said aircraft (20) are measurements of a position with respect to the ground $(\overrightarrow{x_g})$ of said aircraft (20).

10. Method according to any one of claims 1 to 9, **characterised in that** said estimate (120) of states of said mirror process consists in estimating the coefficients of at least one polynomial function of the time close to said displacement measurements.

11. Method according to claim 10, **characterised in that** since said displacement measurements are measurements of velocity with respect to the ground $\overrightarrow{v_g}$, said model of said mirror process being capable of generating a second-degree polynomial function of the time for the north/south component of velocity with respect to the ground and a first-degree polynomial function of the time for the east/west component of velocity with respect to the ground.

12. Method according to either one of claims 10 or 11, **characterised in that** said estimate (120) of states of said mirror process is carried out by the method of least squares, in which the coefficients to be identified are those of said at least one polynomial function of the time.

13. Method according to any one of claims 1 to 11, **characterised in that** said estimate (120) of states of said mirror processes consists in a Kalman filtering in which the states are those of said mirror process and in which the observations are in said displacement measurements with respect to the ground.

14. System (10) for analysing and monitoring interfering movements of an inertial unit (1) during a static alignment phase, said system (10) comprising a displacement sensor (2) of an aircraft (20) providing displacement measurements of said aircraft (20) with respect to the ground, such that said system (10) comprises an estimator (5) of a simplified and/or approximated mirror process with respect to the static alignment process of said inertial unit (1), said estimator (5) being configured so as to implement the method according to claims 1 to 13 and provided with at least one calculator (3) and at least one memory (4) storing validation thresholds of said static alignment of said inertial unit (1) and calculation instructions, said estimator (5) enabling states of said mirror process to be estimated, in which a model is simplified and/or approximated with regard to the model of said static alignment process of said inertial unit (1), said estimate (120) of said states of said mirror process being carried out from observations consisting of displacement measurements provided by said displacement sensor (2).

Fig.1

Fig.2

$v_n$

$v_e$

Fig.3

110

120

130 / 140

**Fig.4**

**Fig.5**

**Fig.6**

**EP 3 385 677 B1**

## RÉFÉRENCES CITÉES DANS LA DESCRIPTION

**Documents brevets cités dans la description**

- EP 2488829 A
- FR 2940427
- US 2006047427 A

**Littérature non-brevet citée dans la description**

- Inside GNSS », chronique « GNSS solutions. *How does a GNSS receiver estimate velocity ?,* Mars 2015